# EUROPEAN PATENT APPLICATION

(11) **EP 4 684 616 A1**
(43) Date of publication of application: **28.01.2026**
(21) Application number: 25190298.7
(22) Date of filing: 17.07.2025
(51) Int. Cl.: A01B 1/02

(54) **TOOL FOR DIGGING**

(30) Priority: 24.07.2024 GB 202410858; 03.09.2024 GB 202412899
(71) Applicant: Westland Horticulture Limited, Belfast, Antrim BT9 6SA (GB)
(72) Inventor: BARNARD, Tim, Belfast BT9 6SA (GB); McARDLE, Simon John, Belfast BT9 6SA (GB)
(74) Representative: Murgitroyd & Company

(57) **Abstract**

A tool 1 for digging comprises a cutting means 2 comprising a blade 21 and a collar 22, a shaft 3 comprising a longitudinal aperture 31, a fastening means 4 for attaching the cutting means 2 to the shaft 3 and a reinforcement means 5 located within the longitudinal aperture 31 of the shaft 3. The cutting means 2 is attached to the shaft 3 such that a first portion 51 of the reinforcement means 4 is located within the collar 22 and a second portion 52 of the reinforcement means 4 is located outside the collar.

## Description

The invention relates to a tool for digging, for example a spade, shovel or pitch fork.

### Background

Shovels, spades and pitchforks are tools that can be used for digging. Such tools generally include a cutting arrangement having at least one blade and an elongated handle or shaft for manipulating the cutting arrangement. The cutting arrangement typically includes a collar attached to the blade(s), the collar being configured to receive an end of the elongated handle or shaft, allowing suitable connection of these components.

Digging tools are often used for moving relatively heavy material, such as mud, soil, stones and/or aggregates. When taking advantage of the leverage provided by the elongated handle or shaft of such tools in use, considerable stress can be applied to the area of connection between the cutting means and the elongated handle or shaft. Deformation or breakage of the elongated handle or shaft can result at the connection point with the collar. Such deformation or breakage results from forces applied to the handle while digging. There exists a need for providing a digging tool which can mitigate against such problems.

### Summary of the invention

According to a first aspect of the invention there is provided a tool for digging, the tool comprising a cutting means comprising a blade and a collar, a shaft and a reinforcement means located within the shaft. Advantageously, the reinforcement means can be used to prevent deformation or breakage of the shaft.

According to another aspect of the invention there is provided a tool for digging, the tool comprising:
a cutting means comprising a blade and a collar;
a shaft comprising a longitudinal aperture;
a fastening means for attaching the cutting means to the shaft; and
a reinforcement means located within the longitudinal aperture of the shaft,
wherein the cutting means is attached to the shaft such that a first portion of the reinforcement means is located within the collar and a second portion of the reinforcement means is located outside the collar. Advantageously, the reinforcement means provides added strength to the shaft at the point of connection with the cutting means.

According to another aspect of the invention there is provided a shaft for a tool, the shaft comprising a longitudinal aperture, wherein a reinforcement means is locatable within the longitudinal aperture, and wherein a cutting means comprising a blade and a collar is attachable to the shaft such that a first portion of the reinforcement means is located within the collar and a second portion of the reinforcement means is located outside the collar. Advantageously, the shaft can be incorporated into a tool for digging having increased strength.

Optionally the cutting means is attached to the shaft such that at least a first portion of the reinforcement means is located within the collar.

Optionally the cutting means is attached to the shaft such that a first portion of the reinforcement means is located within the collar and a second portion of the reinforcement means is located outside the collar.

Optionally the reinforcement means is located across the joint between the collar and the shaft. Advantageously, the reinforcement means is adapted to distribute the stress in the area of the joint.

Optionally the reinforcement means comprises a cylindrical pin. Advantageously, the cylindrical pin can be easily manufactured and inserted into the longitudinal aperture of the shaft during manufacture of the tool. Optionally the reinforcement means comprises a steel pin, such as a heat-treated steel pin. Advantageously, the steel pin provides increased strength to the shaft.

Optionally the reinforcement means has a diameter of more than 9 mm. Optionally the reinforcement means has a diameter of less than 15 mm. Optionally the reinforcement means has a diameter of 12 mm. Advantageously, the diameter of the reinforcement means is chosen such that it does not bend when exposed to the typical forces experienced in use, and prevents the shaft from breaking or splitting when the shaft is exposed to the typical forces experienced in use.

Optionally the tool comprises a fastening means for attaching the cutting means to the shaft.

Optionally the fastening means comprises a screw, bolt or rivet.

Optionally the fastening means passes through apertures in the collar and/or the shaft.

Optionally the fastening means passes through transverse apertures in the collar and the shaft.

Optionally the collar and/or the shaft comprise apertures for receiving the fastening means.

Optionally the collar and/or the shaft comprise transverse apertures for receiving the fastening means.

Optionally the fastening means does not pass through the reinforcement means. Advantageously, the fastening means is adapted for attaching the cutting means to the shaft without reducing the strength or structural integrity of the reinforcement means.

Optionally the longitudinal aperture is a stopped hole. Advantageously, the reinforcement means can be securely held within the stopped hole. Optionally the shaft has an open end. Advantageously, the reinforcement means can be inserted into the shaft via the open end.

Optionally the longitudinal aperture extends between an open end of the shaft and a stop position.

Optionally the open end of the shaft is located within the collar. Advantageously, the collar prevents e.g. dirt and debris from entering the shaft via the open end.

Optionally the fastening means passes through the shaft between the open end of the shaft and the stop position.

Optionally the fastening means passes through the shaft between the open end of the shaft and the reinforcement means.

Optionally the fastening means passes through the shaft between the open end of the shaft and one end of the reinforcement means.

Optionally the length of the reinforcement means is less than or equal to the distance between the fastening means and the stop position.

Optionally the shaft comprises an outer recess for receiving the collar. Optionally the outer diameter of the shaft is equal to the outer diameter of the collar at the position where the shaft and the collar meet.

Optionally the shaft is a wooden or plastic shaft.

Optionally the cutting means comprises a cutting tip, such as a square, pointed or a round tip.

Optionally the cutting means comprises at least one step.

Optionally the cutting means is a steel cutting means.

Optionally the collar comprises a cylindrical portion adapted to receive the shaft. Advantageously, the collar is adapted to transfer forces applied to the shaft to the cutting means.

Optionally the collar comprises a tapered cylindrical portion adapted to receive the shaft. Advantageously, the collar is adapted to receive and secure the shaft in place.

Optionally the shaft comprises a handle.

Optionally the tool is a spade, shovel or trench fork.

According to a further aspect of the invention there is provided a method of manufacturing a tool for digging, the method comprising:
providing a cutting means comprising a blade and a collar;
providing a shaft comprising a longitudinal aperture;
providing a reinforcement means;
locating the reinforcement means within the longitudinal aperture of the shaft; and
attaching the cutting means to the shaft such that at least a portion of the reinforcement means is located within the collar, wherein attaching the cutting means to the shaft comprises passing a fastening means through the collar and the shaft. Advantageously, the method of manufacturing provides a simple and effective way to provide a reinforced digging tool.

According to a further aspect of the invention there is provided a method of manufacturing a tool for digging, the method comprising:
providing a cutting means comprising a blade and a collar;
providing a shaft;
providing a reinforcement means;
locating the reinforcement means within the shaft; and
attaching the cutting means to the shaft such that at least a portion of the reinforcement means is located within the collar. Advantageously, the method of manufacturing provides a simplified method for manufacturing a reinforced digging tool.

Optionally attaching the cutting means to the shaft comprises passing a fastening means through the collar and the shaft.

Optionally attaching the cutting means to the shaft comprises passing a fastening means through the collar and the shaft such that the fastening means does not pass through the reinforcement means.

Optionally attaching the cutting means to the shaft comprises passing a fastening means through the shaft between the open end of the shaft and the stop position.

Optionally providing a shaft comprising a longitudinal aperture comprises drilling a stopped hole through the shaft.

### Brief description of the drawings

The invention will be described by way of example only referring to the figures, in which:
Figure 1 shows front and rear perspective view of a spade according to an aspect of the invention.
Figure 2 shows front and side views of the spade of figure 1.
Figure 3 shows an exploded perspective view of the spade of figure 1.
Figure 4 shows a cutaway perspective view of the spade of figure 1.
Figure 5 shows a cross-sectional side view of the spade of figure 1.
Figure 6 shows a front view and a cross-sectional side view of a cutting arrangement.
Figure 7 shows a front view and a cross-sectional side view of a shaft according to an aspect of the invention.
Figure 8 shows a schematic view of a method according to an aspect of the invention.

### Detailed description

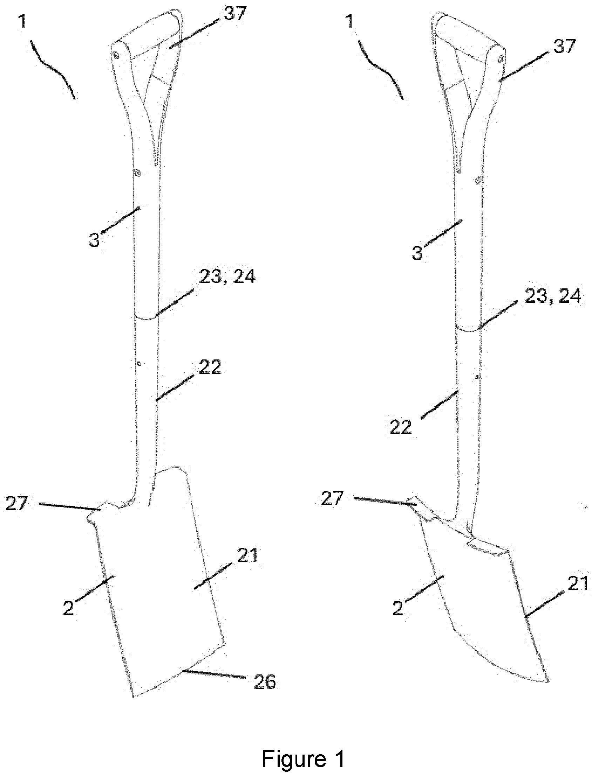

Figures 1 to 5 illustrate a tool for digging 1 according to an aspect of the present invention. The tool 1 is in the form of a spade. In optional embodiments the tool may be any suitable tool for digging, such as a spade, shovel or trench fork. The tool 1 comprises a cutting arrangement 2, a shaft 3, a fastening arrangement 4 and a reinforcement arrangement 5.

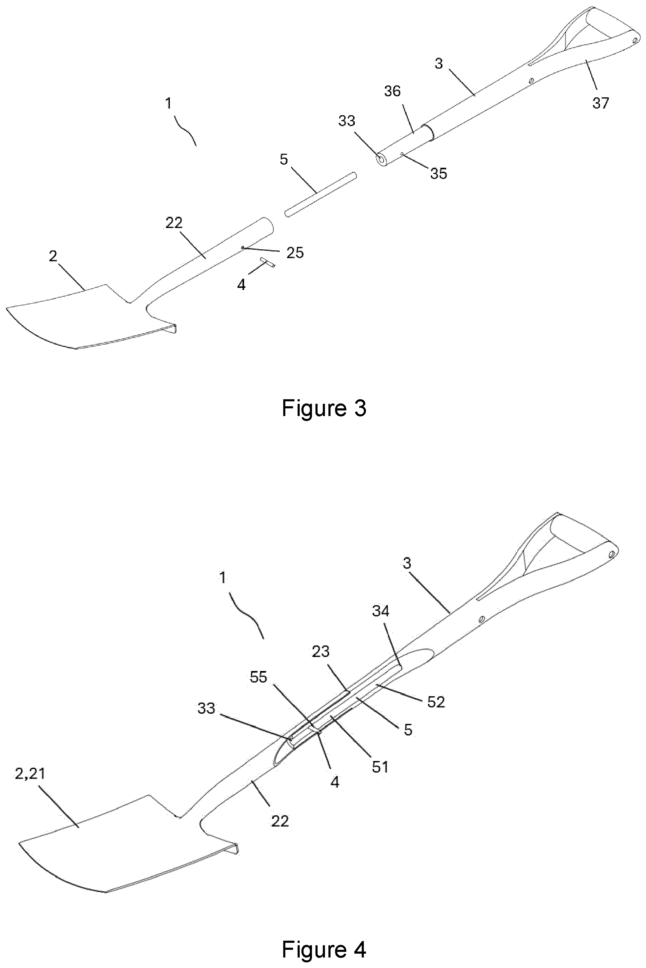

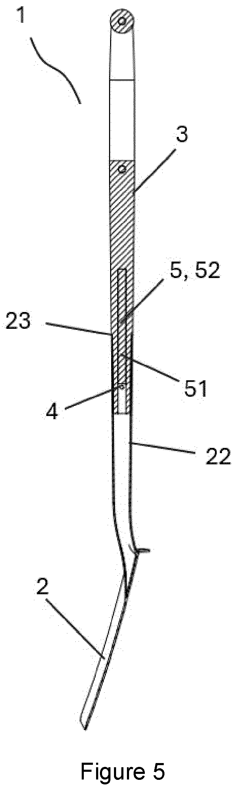

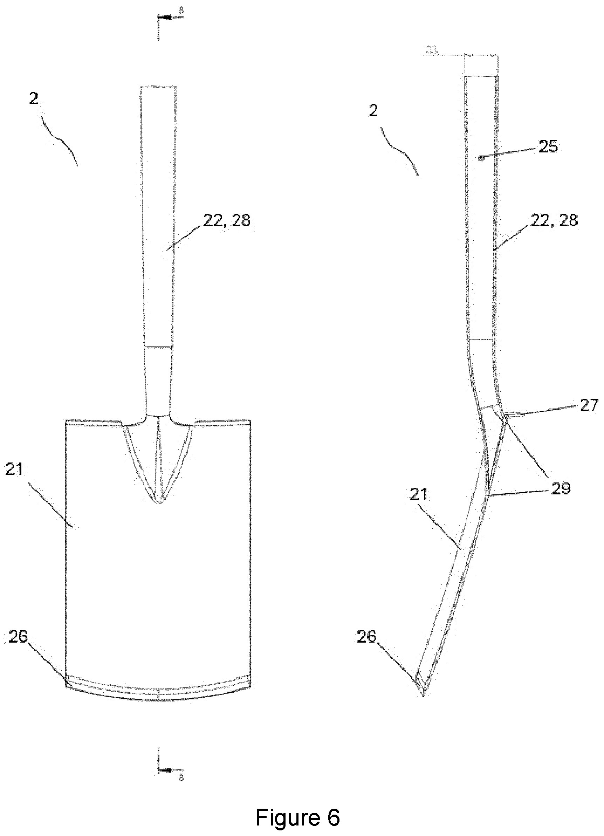

The tool 1 comprises a cutting arrangement 2 comprising a blade 21 and a collar 22. Figure 6 illustrates the cutting arrangement 2 in detail. The blade 21 is attached to the collar 22, for example via a welded joint 29. The cutting arrangement 2 comprises a cutting tip 26, such as a square, pointed or round tip. The cutting arrangement 2 comprises at least one step 27. The cutting arrangement 2 is a steel cutting arrangement. The collar 22 comprises a cylindrical portion 28, for example a tapered cylindrical portion 28, adapted to receive the shaft 3. Advantageously, the collar 22 is adapted to transfer forces applied to the shaft 3 to the cutting arrangement 2, particularly the blade 21, in use. The collar 22 is adapted to receive and secure the shaft 3 in place (see e.g. figures 4 and 5).

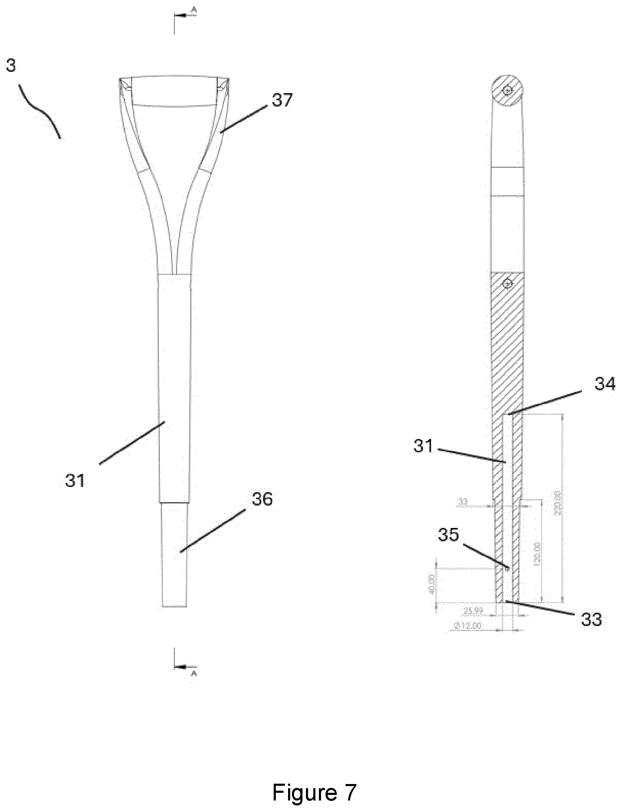

The tool 1 further comprises a shaft 3. Figure 7 illustrates the shaft 3 in detail. The shaft 3 is a wooden or plastic shaft. In some embodiments, the shaft 3 is a wooden shaft. The shaft 3 comprises a handle 37 at a distal end thereof. The shaft 3 extends along a longitudinal axis.

The shaft 3 comprises a longitudinal aperture 31. The longitudinal aperture extends along a direction which is parallel or substantially parallel to the longitudinal axis of the shaft 3. The reinforcement arrangement 5 is locatable within the longitudinal aperture 31. The cutting arrangement 2 is attachable to the shaft 3 such that the first portion 51 of the reinforcement arrangement 5 is located within the collar 22 and the second portion 52 of the reinforcement arrangement 5 is located outside the collar 22. The shaft 3 shown in figure 7 can be incorporated into any suitable tool for digging, to provide a leverage member having increased strength.

The longitudinal aperture 31 is a stopped hole. The reinforcement arrangement 5 can be securely held within the longitudinal aperture 31 and cannot fall out of the shaft 3 since it is held in place by the end 34 of the stopped hole and the fastening arrangement 4. The shaft 3 has an open end 33. The open end 33 of the shaft 3 and the handle 37 are located at opposing distal ends of the shaft 3. The reinforcement arrangement 5 can be inserted into the shaft 3 via the open end 33. The longitudinal aperture 31 extends between the open end 33 of the shaft and a stop position 34, which corresponds to the maximum depth of the longitudinal aperture 31. As shown in figures 4 and 5, the open end 33 of the shaft 3 is located within the collar 22 when the shaft 3 is installed within the collar 22. Advantageously, the collar 22 prevents e.g. dirt and debris from entering the shaft 3 via the open end 33.

The cutting arrangement 2 is attachable to the shaft 3 such that at least the first portion 51 of the reinforcement arrangement 5 is located within the collar 22. In preferred embodiments, the cutting arrangement 2 is attached to the shaft 3 such that the first portion 51 of the reinforcement arrangement 5 is located within the collar 22 and the second portion 52 of the reinforcement arrangement 5 is located outside the collar 22.

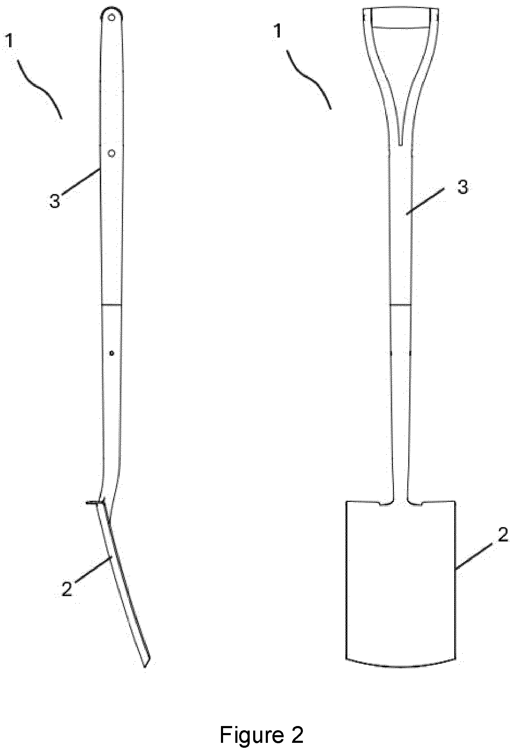

The shaft 3 comprises an outer recess 36 for receiving the collar 22. As shown in e.g. figure 2, the outer diameter of the shaft 3 is equal to the outer diameter of the collar 22 at the position where the shaft 3 and the collar 22 meet (see also figures 6 and 7). The recess 36 in the shaft 3 can accommodate the collar 22, while keeping the outside of the tool 1 smooth at the exposed point of connection 23.

The tool 1 further comprises a reinforcement arrangement 5 located within the longitudinal aperture 31 of the shaft 3. In preferred embodiments, the reinforcement arrangement 5 comprises a cylindrical pin. Such a cylindrical pin can be easily manufactured and inserted into the longitudinal aperture 31 of the shaft 3 during manufacture of the tool 1. In preferred embodiments, the reinforcement arrangement 5 comprises a steel pin, such as a heat-treated steel pin. The steel pin provides increased strength to the shaft. The reinforcement arrangement 5 makes the shaft 3 stronger. The reinforcement arrangement 5 is heat treated. The purpose of the reinforcement arrangement 5 is to distribute the stress in the area of the joint between the shaft 3 and cutting arrangement 2.

In preferred embodiments, the reinforcement arrangement 5 has a diameter of more than 9 mm and less than 15 mm. In some preferred embodiments, the reinforcement arrangement has a diameter of 12 mm. If the reinforcement arrangement 5 is smaller in diameter the pin bends. If the reinforcement arrangement 5 is larger in diameter the wood shaft can split along the grain as there is less wood surrounding the pin. The diameter of the reinforcement arrangement 5 is chosen such that the reinforcement arrangement 5 does not bend when exposed to the typical forces experienced in use, and prevents the shaft 3 from breaking or splitting when the shaft 3 is exposed to the typical forces experienced in use.

As shown in figures 4 and 5, the cutting arrangement 2 is attached to the shaft 3 such that a first portion 51 of the reinforcement arrangement 5 is located within the collar 22 and a second portion 52 of the reinforcement arrangement 5 is located outside the collar 22.

The reinforcement arrangement 5 provides added strength to the shaft 3 at the point of connection with the cutting arrangement 2. In particular, the reinforcement arrangement 5 provides added strength to the shaft 3 at the point 23 where the collar 22 applies the most stress to the shaft (i.e. at the open end 24 of the collar 22). The reinforcement arrangement 5 can be used to prevent deformation or breakage of the shaft 3, for example when opposing forces are applied to the shaft 3 and the cutting arrangement 2. As shown in figures 4 and 5, the reinforcement arrangement 5 is located across the joint between the collar 22 and the shaft 3. In use, the reinforcement arrangement 5 is adapted to distribute the stress in the area of the joint.

The tool 1 further comprises a fastening arrangement 4 for attaching the cutting arrangement 2 to the shaft 3. In embodiments, the fastening arrangement 4 comprises a screw, bolt or rivet. The collar 2 and the shaft 3 comprise apertures 25, 35 for receiving the fastening arrangement 4. The apertures 25, 35 are transverse apertures in that they extend along a direction which is perpendicular or substantially perpendicular to the axis of the shaft/collar. The fastening arrangement 4 passes through the respective apertures 25, 35 in the collar 2 and the shaft 3. As shown in figures 4 and 5, the fastening arrangement 4 does not pass through the reinforcement arrangement 5. The fastening arrangement 4 is adapted for attaching the cutting arrangement 2 to the shaft 3 without interfering with or otherwise reducing the strength or structural integrity of the reinforcement arrangement 5.

As shown in figure 5, the fastening arrangement 4 passes through the shaft 3 between the open end 33 of the shaft 3 and the stop position 34 of the hole 31. In embodiments, the fastening arrangement 4 passes through the shaft 3 between the open end 33 of the shaft 3 and the reinforcement arrangement 5 (i.e. one end 55 of the reinforcement arrangement 5), holding the reinforcement arrangement 5 in place. The length of the reinforcement arrangement 5 (i.e. the distance between distal ends of the reinforcement arrangement 5) is less than or equal to the distance between the fastening arrangement 4 and the stop position 34.

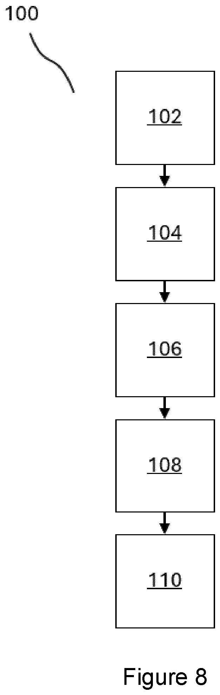

Figure 8 shows a method 100 according to an aspect of the invention. The method 100 is a method of manufacturing a tool for digging (e.g. the tool 1 shown in figures 1-5). The method 100 comprises: providing a cutting arrangement comprising a blade and a collar (step 102); providing a shaft comprising a longitudinal aperture (step 104); providing a reinforcement arrangement (step 106); locating the reinforcement arrangement within the longitudinal aperture of the shaft (step 108); and attaching the cutting arrangement to the shaft such that at least a portion of the reinforcement arrangement is located within the collar (step 110). Attaching the cutting arrangement to the shaft comprises passing a fastening arrangement through the collar and the shaft. Attaching the cutting arrangement to the shaft comprises passing a fastening arrangement through the collar and the shaft. In particular, a fastening arrangement is passed through the collar and the shaft such that the fastening arrangement does not pass through the reinforcement arrangement. The fastening arrangement is passed through the shaft between the open end of the shaft and the stop position 34. Providing a shaft comprising a longitudinal aperture comprises drilling a stopped hole through the shaft. The method 100 provides a simple and effective way to provide a reinforced digging tool.

As will be understood by the skilled person, the example embodiments presented above can be modified in a number of ways without departing from the scope of the invention.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

1. A tool for digging, the tool comprising:
a cutting means comprising a blade and a collar;
a shaft comprising a longitudinal aperture;
a fastening means for attaching the cutting means to the shaft; and
a reinforcement means located within the longitudinal aperture of the shaft,
wherein the cutting means is attached to the shaft such that a first portion of the reinforcement means is located within the collar and a second portion of the reinforcement means is located outside the collar.

2. A tool according to claim 1, wherein the reinforcement means comprises a cylindrical pin, for example a steel pin, such as a heat-treated steel pin.

3. A tool according to claim 1 or claim 2, wherein the reinforcement means has a diameter of more than 9 mm and/or less than 15 mm, for example 12 mm.

4. A tool according to any preceding claim, wherein the fastening means passes through transverse apertures in the collar and the shaft.

5. A tool according to any preceding claim, wherein the fastening means does not pass through the reinforcement means.

6. A tool according to any preceding claim, wherein the longitudinal aperture is a stopped hole.

7. A tool according to any preceding claim, wherein the longitudinal aperture extends between an open end of the shaft and a stop position.

8. A tool according to claim 7, wherein the open end of the shaft is located within the collar.

9. A tool according to claim 7 or claim 8, wherein the fastening means passes through the shaft between the open end of the shaft and the stop position.

10. A tool according to any preceding claim, wherein the outer diameter of the shaft is equal to the outer diameter of the collar at the position where the shaft and the collar meet.

11. A tool according to any preceding claim, wherein the shaft is a wooden or plastic shaft, optionally wherein the shaft comprises a handle.

12. A tool according to any preceding claim, wherein the tool is a spade, shovel or trench fork and wherein the cutting means comprises a cutting tip, such as a square, pointed or a round tip.

13. A tool according to any preceding claim, wherein the collar comprises a cylindrical portion adapted to receive the shaft.

14. A shaft for a tool, the shaft comprising a longitudinal aperture, wherein a reinforcement means is locatable within the longitudinal aperture, and wherein a cutting means comprising a blade and a collar is attachable to the shaft such that a first portion of the reinforcement means is located within the collar and a second portion of the reinforcement means is located outside the collar.

15. A method of manufacturing a tool for digging, the method comprising:
providing a cutting means comprising blade and a collar;
providing a shaft comprising a longitudinal aperture;
providing a reinforcement means;
locating the reinforcement means within the longitudinal aperture of the shaft; and
attaching the cutting means to the shaft such that a portion of the reinforcement means is located within the collar, wherein attaching the cutting means to the shaft comprises passing a fastening means through the collar and the shaft such that the fastening means does not pass through the reinforcement means.
